(19) Europäisches Patentamt
European Patent Office
Office européen des brevets

(11) **EP 1 833 003 A2**

(12) **EUROPEAN PATENT APPLICATION**

(43) Date of publication:
**12.09.2007 Bulletin 2007/37**

(51) Int Cl.:
***G06K 9/20*** *(2006.01)*

(21) Application number: **07004511.7**

(22) Date of filing: **06.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **07.03.2006 JP 2006060637**<br><br>(71) Applicant: **KABUSHIKI KAISHA TOSHIBA**<br>**Tokyo 105-8001 (JP)** | (72) Inventors:<br>• **Aoki, Yasuhiro**<br>**Int. Property Div.**<br>**Minato-ku**<br>**Tokyo 105-8001 (JP)**<br>• **Sato, Toshio**<br>**Int. Property Div.**<br>**Minato-ku**<br>**Tokyo 105-8001 (JP)**<br><br>(74) Representative: **HOFFMANN EITLE**<br>**Patent- und Rechtsanwälte**<br>**Arabellastrasse 4**<br>**81925 München (DE)** |

(54) **Face authentication apparatus and face authentication method**

(57)  A face authentication apparatus (100) uses a facial region detecting section (105) to detect an image of a facial region of an authentication target person based on each of a plurality of images supplied from a camera (104) that continuously shoots a predetermined target range, uses an authenticating section (106) to authenticate the authentication target person based on a facial image detected from each image captured by the camera (104), uses a state estimating section (108) to estimate a state of the authentication target person based on the facial image detected from each image captured by the camera (104), determines a guidance in accordance with the estimated state of the authentication target person, and outputs the guidance to a display device (103) or an audio guidance device (102) from an output section (109).

| Measurement amount | Walking state | Information displayed for walker |
|---|---|---|
| When facial size is small | Too far | Information that urges forward movement (blue signal) |
| When variation in facial size is large | Walking speed is too high | Information that urges reduction in walking speed (yellow signal) |
| When facial size exceeds fixed amount | Too close | Information that urges stop (or backward movement) (red signal) |
| Number of collected frames exceeds necessary number | | Information indicative of allowance of passage (green signal) |

FIG. 2

EP 1 833 003 A2

**Description**

The present invention relates to a face authentication apparatus and a face authentication method that collate a plurality of images obtained by continuously shooting a face of an authentication target person with information concerning a face of a registrant previously stored in a storage section as dictionary information to judge whether the authentication target person is a registrant.

For example, Jpn. Pat. Appln. KOKAI Publication No. 2001-266152 (Patent Document 1) discloses a face authentication apparatus that collates a facial image of an authentication target person captured by a camera with a facial image previously stored in a dictionary database. In Patent Document 1, a face of an authentication target person in a still state is shot. Therefore, according to the face authentication apparatus disclosed in Patent Document 1, an authentication target person is brought to a stand in front of a camera, and a face of the authentication target person in this state is shot.

Further, Jpn. Pat. Appln. KOKAI Publication No. 2003-141541 (Patent Document 2) discloses a face authentication apparatus that displays a guidance for an authentication target person so that a distance between a camera and the authentication target person falls within a fixed range. Furthermore, Patent Document 2 discloses a method of guiding a standing position for an authentication target person based on a facial size detected from an image captured by a camera.

However, in a face authentication apparatus aimed at a walking authentication target person (a walker) (a walker authentication apparatus), a facial size in a moving image obtained by shooting a walker continuously varies. Therefore, applying the method disclosed in Patent Document 2 to the walker authentication apparatus is difficult.

Moreover, Jpn. Pat. Appln. KOKAI Publication No. 2004-356730 (Patent Document 3) discloses a facial authentication apparatus aimed at a walking authentication target person (a walker). In the face authentication apparatus disclosed in Patent Document 3, a method of displaying a guidance screen for a walker to maintain a facial direction of the walker constant is explained. However, in Patent Document 3, judging a walking state of a walker or providing a guidance in accordance with a walking state is not explained. Therefore, according to the method disclosed in Patent Document 3, an appropriate guidance cannot be provided in accordance with, e.g., a walking speed of a walker or walking states of a plurality of walkers. As a result, according to the method disclosed in Patent Document 3, the number of facial image frames required for facial image collation processing may not be collected.

According to an aspect of the present invention, it is an object of the present invention to provide a face authentication apparatus and a face authentication method that can improve an authentication accuracy of an authentication target person.

According to an aspect of the present invention, there is provided a face authentication apparatus comprises, a face detecting section that detects a facial image of an authentication target person from each of a plurality of images supplied from a shooting device that continuously shoots a predetermined shooting range, a state estimating section that estimates a state of the authentication target person based on the facial image detected from each image by the face detecting section, an output section that outputs a guidance in accordance with the state of the authentication target person estimated by the state estimating section, and an authenticating section that authenticates the authentication target person based on the facial image detected from each image by the face detecting section.

According to an aspect of the present invention, there provided a face authentication method used in a face authentication apparatus, the method comprises, detecting a facial image of an authentication target person from each of a plurality of images supplied from a shooting device that continuously shoots a predetermined shooting range, estimating a state of the authentication target person based on the facial image detected from each image taken by the shooting device, outputting a guidance in accordance with the estimated state of the authentication target person, and authenticating the authentication target person based on the facial image detected from each image taken by the shooting device.

The invention can be more fully understood from the following detailed description when taken in conjunction with the accompanying drawings, in which:

FIG. 1 is a view schematically showing a structural example of a face authentication apparatus according to a first embodiment;

FIG. 2 is a view showing a setting example of display contents in accordance with a facial size and a variation in the facial size;

FIG. 3 is a view for explaining a first display example based on a facial size and a variation in the facial size;

FIG. 4 is a view for explaining a second display example based on a facial size and a variation in the facial size;

FIG. 5 is a flowchart for explaining display control according to the first embodiment;

FIG. 6 is a view schematically showing a structural example of a face authentication apparatus according to a second embodiment;

FIG. 7 is a view showing a structural example of an electric bulletin board as an example of a display device;

FIG. 8 is a view showing a structural example of a projector as an example of the display device;

FIG. 9 is a view showing a setting example of display contents in accordance with a facial direction;
FIG. 10 is a flowchart for explaining a first processing example according to a second embodiment;
FIG. 11 is a schematic view for explaining an angle formed between a position of a walker and a camera;
FIG. 12 is a view showing a change in a camera shooting direction with respect to a change in a position of a walker;
FIG. 13 is a view for explaining estimation of a facial direction in accordance with a change in a position of a walker;
FIG. 14 is a view showing a setting example of display contents in accordance with a position of a walker; and
FIG. 15 is a flowchart for explaining a second processing example according to the second embodiment.

A first and a second embodiments according to the present invention will now be explained hereinafter with reference to the accompanying drawings.

The first embodiment will be first descried.

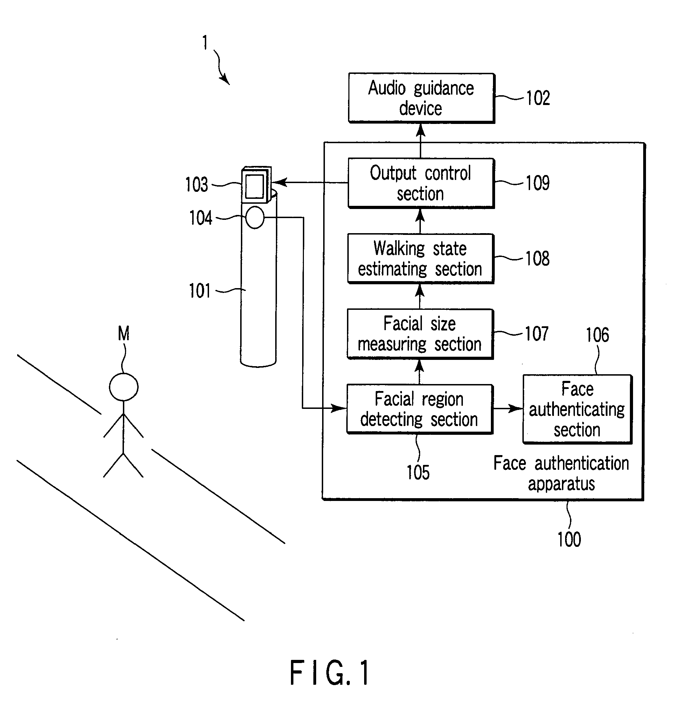

FIG. 1 schematically shows a structural example of a face authentication system 1 according to the first embodiment.

As shown in FIG. 1, the face authentication system 1 is constituted of a face authentication apparatus 100, a support 101, an audio guidance device 102, a display device 103, a camera 104, and others.

The face authentication device 100 is a device that recognizes a person based on his/her facial image. The face authentication device 100 is connected with the audio guidance device 102, the display device 103, and the camera 104. The face authentication device 100 may be installed in the support 101, or may be installed at a position different from the support 101. A structure of the face authentication device 100 will be explained in detail later.

The support 101 is a pole that is long in a height direction of a person. The support 101 is disposed on a side part of a passage along which a walker (that will be also referred to as an authentication target person) M walks. It is to be noted that a height (a length) of the support 101 is set to, e.g., a length substantially corresponding to a maximum height of the walker M.

The audio guidance device 110 emits various kinds of information, e.g., an audio guidance for the walker M in the form of voice. The audio guidance device 110 can be installed at an arbitrary position as long as it is a position where the walker M who is walking along the passage can hear the audio guidance. For example, the audio guidance device 110 may be installed in the support 101 or may be provided in the face authentication device 100.

The display device 103 displays various kinds of information, e.g., a guidance for the walker M. The display device 103 can be installed at an arbitrary position. In this first embodiment, as shown in FIG. 1, it is assumed that the display device 103 is disposed at an upper end of the support 101. As the display device 103, for example, a color liquid crystal display device is used. It is to be noted that a display device, e.g., an electric bulletin board or a projector that will be explained in the second embodiment can be used as the display device 103.

The camera 104 is set in the support 101. The camera 104 is constituted of, e.g., a video camera that captures a moving image (a continuous image for each predetermined frame). The camera 104 captures an image including at least a face of the walker M in accordance with each frame and supplies this image to the face authentication device 100.

The face authentication device 100 is constituted of, e.g., a facial region detecting section 105, a face authenticating section 106, a facial size measuring section 107, a walking state estimating section 108, an output control section 109, and others. It is to be noted that each processing executed by the facial region detecting section 105, the face authenticating section 106, the facial size measuring section 107, the walking state estimating section 108, and the output control section 109 is a function realized when a non-illustrated control element, e.g., a CPU executes a control program stored in a non-illustrated memory. However, each section may be constituted of hardware.

The facial region detecting section 105 detects a facial region from an image captured by the camera 104. That is, the facial region detecting section 105 sequentially inputs an image of each frame captured by the camera 104. The facial region detecting section 105 detects a facial region from the image of each frame captured by the camera 104. The facial region detecting section 105 supplies an image in the detected facial region (a facial image) to the face authenticating section 106 and the facial size measuring section 107.

It is to be noted that a method explained in, e.g., ""Facial minutia extraction based on a combination of shape extraction and pattern matching" by Fukui and Yamaguchi, IECE Japan, (D), vol. J80-D-H, No. 8, pp. 2170-2177, 1997" can be applied to facial region detection processing by the facial region detecting section 105. It is to be noted that the facial region detecting section 105 is configured to indicate a facial region by using respective coordinate values in an X direction and a Y direction in each image captured by the camera 104.

The face authenticating section 106 performs person authentication processing based on a facial image. That is, the face authenticating section 106 acquires a facial image (an input facial image) detected by the facial region detecting section 105 from an image captured by the camera 105. Upon receiving the input facial image, the face authenticating section 106 collates the input facial image with a facial image (a registered facial image) registered in a dictionary database (not shown) in advance. The face authenticating section 106 judges whether a person (a walker) corresponding to the input facial image is a person (a registrant) corresponding to the registered facial image based on a result of collating the input facial image with the registered facial image.

The face authenticating section 106 collates an input facial image group with a registered facial image group by using, e.g., a technique called a mutual subspace method. The face authenticating section 106 using the mutual subspace method calculates a similarity degree between a subspace (a dictionary subspace) obtained from the facial image group of a registrant (a registered facial image group) and a facial image group of a walker (an input facial image group). If the calculated similarity degree is not lower than a predetermined threshold value, the face authenticating section 106 determines that the registrant is equal to the walker. According to the technique, e.g., the mutual subspace method of collating characteristic information obtained from the input image group with characteristic information obtained from the registered image, each input image must be captured under conditions that are equal to those of the registered image as much as possible in order to improve a collation accuracy.

The facial size measuring section 107 executes processing of measuring a size of a facial region (a facial size) detected by the facial region detecting section 105. In this example, it is assumed that a size in the X direction (a lateral direction W) and a size in the Y direction (a vertical direction H) are judged based on respective coordinate values in the X direction and the Y direction in a facial region acquired from the facial region detecting section 105. Additionally, the facial size measuring section 107 calculates a variation in a facial size. The facial size measuring section 107 calculates a variation in a measured facial size based on a difference amount from a facial size detected from an image of a preceding frame. It is to be noted that the walking state estimating section 108 may calculate a variation in the facial size.

That is, the facial size measuring section 107 measures a facial size in an image of each frame based on information indicative of a detected facial region from the image of each frame that is sequentially supplied from the facial region detecting section 105. When the facial size measuring section 107 measures the facial size in the image of each frame, it calculates a variation in the facial size based on a difference between the measured facial size and the facial size measured from the facial region in the image of the preceding frame. The facial size measuring section 107 supplies information indicative of the facial size and the variation in the facial size to the walking state estimating section 108 as a measurement result.

The walking state estimating section 108 executes processing of estimating a walking state based on a facial size measured by the facial size measuring section 107 and a variation in the facial size. For example, the walking state estimating section 108 estimates a position of a walker (a relative position of the walker with respect to the camera) based on the facial size measured by the facial size measuring section 107. Further, the walking state estimating section 108 estimates a walking speed of the walker based on the variation in the facial size measured by the size measuring section 107. Furthermore, the walking state estimating section 108 executes processing of judging display contents to be displayed in the display device 103 and contents of an audio guidance provided by the audio guidance device 102. The walking state estimating section 108 is configured to supply information indicative of the display contents and information indicative of the contents of the audio guidance according to the walking state to the output control section 109.

The output control section 109 performs display control, audio output control, and others in accordance with the walking state estimated by the walking state estimating section 108. The output control section 109 is constituted of a display control section that controls the display contents to be displayed in the display device 103, an audio control section that controls voice generated by the audio guidance device 102, and others. The display contents and others in the display device 103 controlled by the output control section 109 will be explained later in detail.

Display control over the display device 103 by the face authentication device 100 will now be described.

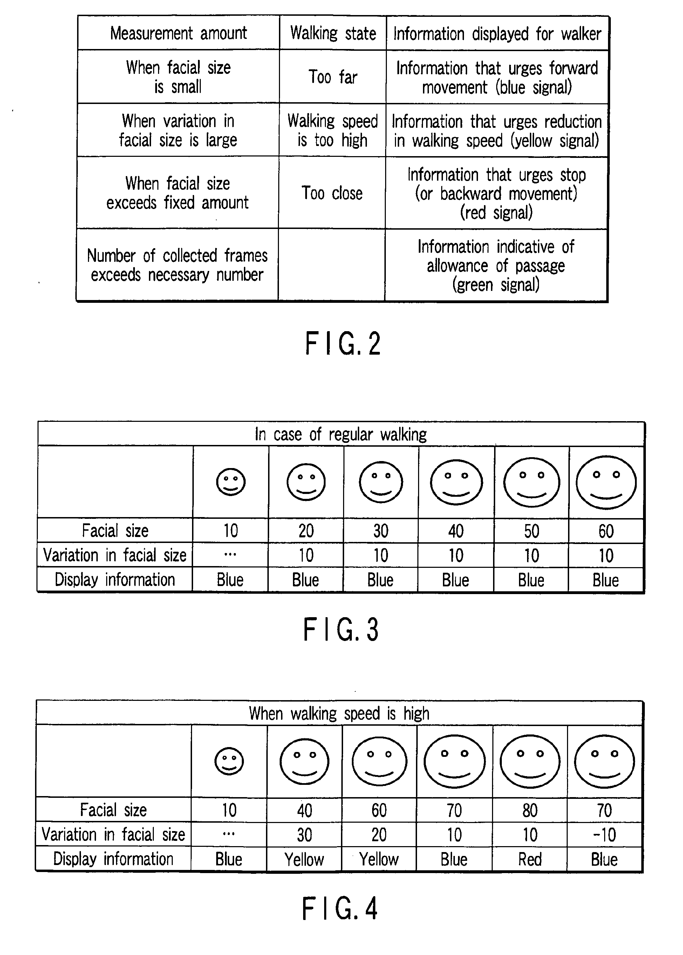

FIG. 2 is a view showing a setting example of display contents according to a walking state (a facial size and a variation in the facial size). It is assumed that such setting information of display contents as shown in FIG. 2 is stored in, e.g., the waking state estimating section 108.

In the setting example depicted in FIG. 2, display contents based on a position of a walker and a moving speed of the walker are set. A walking state of the walker is judged by the waking state estimating section 108. Such display contents based on the walking state as shown in FIG. 2 are determined by the walking state estimating section 108 or the output control section 109. In this example, it is assumed that the walking state estimating section 108 judges display contents according to the walking state, and supplies the judged display contents to the output control section 109.

If an installation position of the camera 104, a zoom magnification, and others of the camera 104 are fixed, a facial size in an image captured by the camera 104 is information indicative of a position of a walker. That is, it is estimated that a face of the walker is closer to the camera 104 when the facial size is large and that the face of the walker is distanced from the camera 104 when the facial size is small. In this manner, the walking state estimating section 108 estimates a position of the walker based on the facial size.

Moreover, in this example, it is assumed that a facial size is compared with predetermined values (a lower limit value and an upper limit value) to be judged. The lower limit value is a threshold value that is used to determine that a position of a walker is too far from the camera, and the upper limit value is a threshold value that is used to determine that a position of the walker is too close to the camera. Therefore, when it is determined that the facial size is smaller than the predetermined lower limit value, the walking state estimating section 108 determines that a walking position is too far from the camera since the facial size is too small. Additionally, when it is determined that the facial size is not smaller than the predetermined upper limit value, the walking state estimating section 108 determines that the walking position is too close to the camera since the facial size is too large.

In the setting example depicted in FIG. 2, when it is determined that the facial size is smaller than the predetermined lower limit value, i.e., when it is determined that the walking position is too far from the camera, the walking state estimating section 108 determines to display a guidance that urges the walker to walk (move forward). In the setting example depicted in FIG. 2, as the guidance that urges walking, a blue signal is set to be displayed. Therefore, when it is determined that the facial size is smaller than the lower limit value, the walking state estimating section 108 supplies the output control section 109 with information indicating that the blue signal is displayed in the display device 103 as display information that urges walking. As a result, the output control section 109 displays the blue signal as the guidance that urges walking in the display device 103. Further, the output control section 109 may control the audio guidance device 102 to generate an audio guidance that urges walking as well as effecting display control with respect to the display device 103.

Furthermore, in the setting example depicted in FIG. 2, when it is determined that the facial size is not smaller than the predetermined upper limit value, i.e., when it is determined that a walking position is too close to the camera, the walking state estimating section 108 determines to display a guidance that urges the walker to move back (or stop walking). In the setting example depicted in FIG. 2, as the guidance that urges backward movement (or pause of walking), a red signal is set be displayed. When it is determined that the facial size is equal to or above the upper limit value, the walking state estimating section 108 supplies the output control section 109 with information indicating that the red signal as display information that urges backward movement (or pause of walking) is displayed in the display device 103. As a result, the output control section 109 displays the red signal as display information that urges backward movement (or pause of walking) in the display device 103. Further, the output control section 109 may control the audio guidance device 102 to generate an audio guidance that urges pause of walking as well as effecting display control with respect to the display device 103.

It is to be noted that, as the upper limit value with respect to the facial size, a threshold value allowing pause (a facial image of a facial size that can be subjected to face collation) and a threshold value requiring backward movement (a facial image of a facial size that cannot be subjected to facial collation) may be set. In this case, a guidance that urges a walker to stop and a guidance that urges the walker to move back can be appropriately provided.

Furthermore, if an installation position, a zoom magnification, and others of the camera 104 are fixed, a variation in a facial size in an image captured by the camera 104 is information indicative of a moving speed (a walking speed) of a walker with respect to the camera 104. That is, it is estimated that a moving speed of a walker toward the camera 104 is high when a variation in the facial size is large, and that a moving speed of the walker toward the camera 104 is low when a variation in the facial size is small. In this manner, the walking state estimating section 108 estimates a moving speed of the walker based on a variation in the facial size.

Moreover, in this example, like the setting example depicted in FIG. 2, when it is determined that a variation in the facial size is too large (i.e., a walking speed of a walker is too high), a guidance that urges the walker to reduce the walking speed is provided. Therefore, the walking state estimating section 108 judges whether the moving speed of the walker is too high based on whether a variation in the facial size is larger than a predetermined value.

In the setting example depicted in FIG. 2, when it is determined that a variation in the facial size is too large (i.e., a walking speed of a walker is too high), a yellow signal is set to be displayed in the display device 103 as a guidance that urges a reduction in the walking speed. Therefore, when it is determined that a variation in the facial size is not lower than a predetermined reference value, the walking state estimating section 108 supplies the output control section 109 with information indicating that the yellow signal is displayed in the display device 103 as display information that urges a reduction in the walking speed. As a result, the output control section 109 displays the yellow signal as the display information that urges a reduction in the walking speed in the display device 103. Further, the output control section 109 may control the audio guidance device 102 to generate an audio guidance that urges a reduction in the walking speed as well as effecting display control with respect to the display device 103.

FIGS. 3 and 4 are views for explaining display examples based on a facial size and a variation in the facial size. The display example depicted in FIG. 3 is a view for explaining a display example (a first display example) with respect to an authentication target person who walks at a standard (appropriate) speed. FIG. 4 is a view for explaining a display example (a second display example) with respect to an authentication target person who walks at a high speed. It is to be noted that FIGS. 3 and 4 show facial sizes and variations detected from images captured at fixed time intervals.

In the example depicted in FIG. 3, the facial size varies to "10", "20", "30", "40", "50", and "60" at fixed time intervals. Furthermore, variations between the respective facial sizes are all "10". In this case, when the facial size "60" is equal to or below a predetermined upper limit value and the variation "10" is equal to or below a predetermined reference value, the walking state estimating section 108 supplies information indicating that the "blue signal" is displayed as the display information that urges walking to the output control section 109 as shown in FIG. 3. As a result, the output control section 109 displays the "blue signal" in the display device 103.

On the other hand, in the example depicted in FIG. 4, the facial size varies to "10", "40", "60", "70", 80", and "70".

The variations between the respective facial sizes are "30", "20", "10", "0", and "0". In this case, when the variations "30" and "20" are equal to or above the predetermined reference value for the variations, the walking state estimating section 108 supplies information indicative of display of the "yellow signal" as the display information that urges a reduction in a walking speed to the output control section 109 as shown in FIG. 4. As a result, when the variation becomes "30" or "20", the output control section 109 displays the "yellow signal" in the display device 103. Further, when the facial size "80" is equal to or above the upper limit value for the facial size, the walking state estimating section 108 supplies information indicative of display of the "red signal" as the display information that urges backward movement (or pause of walking) to the output control section 109. As a result, the output control section 109 displays the "red signal" in the display device 103 when the facial size becomes "80".

A flow of processing in the face authentication system 1 will now be explained.

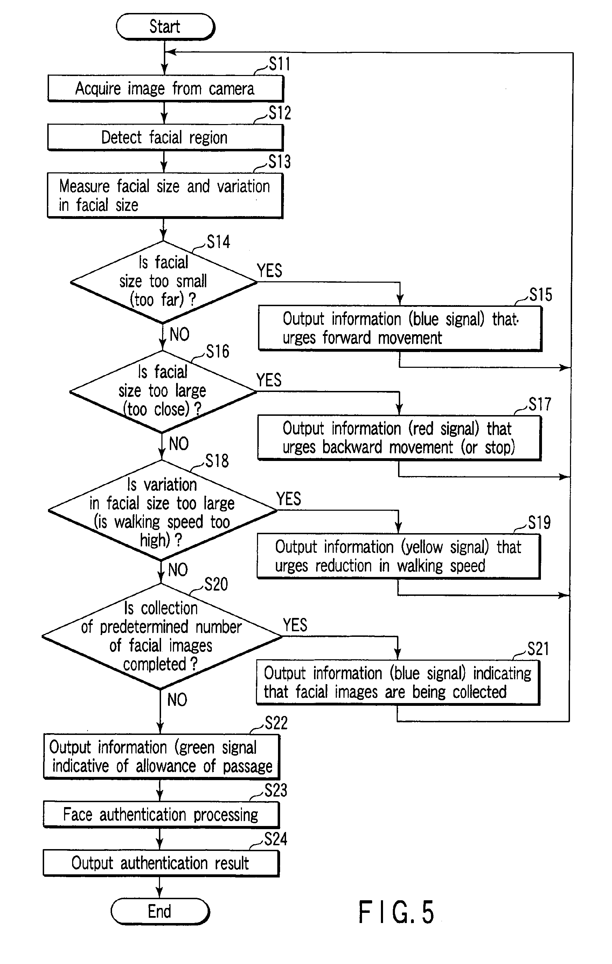

FIG. 5 is a flowchart for explaining a flow of processing in the face authentication system 1.

Images of respective frames captured by the camera 104 are sequentially supplied to the facial region detecting section 105. When an image is supplied from the camera 104 (a step S11), the facial region detecting section 105 detects an image of a facial region of a walker from this image (a step S12). The image of the facial region of the walker detected by the facial region detecting section 105 is supplied to the face authenticating section 106 and the facial size measuring section 107. Here, the face authenticating section 106 stores facial images detected from respective frames until the number of facial images required as input facial images are obtained (until collection of facial images is completed).

The facial size measuring section 107 measures a facial size and a variation in the facial size from information indicative of a facial region detected by the facial region detecting section 105 (a step S13). That is, the facial size measuring section 107 measures the facial size from the information indicative of the facial region detected by the facial region detecting section 105. The facial size measuring section 107 stores information indicative of the measured facial size. When the facial size is measured, the facial size measuring section 107 measures (calculates) a variation in the facial size detected from an image of a previous frame. When the facial size and the variation in the facial size are measured, the facial size measuring section 107 supplies information indicative of the facial size and the variation in the facial size to the walking state estimating section 108.

The walking state estimating section 108 judges display information in accordance with a walking state based on the facial size and the variation in the facial size measured by the facial size measuring section 107. That is, the walking state estimating section 108 judges whether the facial size measured by the facial size measuring section 107 is less than a predetermined lower limit value (a step S14). When it is determined that the facial size is less than the predetermined lower limit value based on this judgment (the step S14, YES), the walking state estimating section 108 supplies information indicative of display of information that urges a walker to move forward (e.g., the blue signal) to the output control section 109. In this case, the output control section 109 displays the display information that urges the walker to move forward (e.g., the blue signal) in the display device 103 (a step S15). At this time, the output control section 109 may allow the audio guidance device 102 to generate audio information that urges the walker to move forward.

Further, when it is determined that the facial size is equal to or above the predetermined lower limit value based on the judgment (the step S14, NO), the walking state estimating section 108 judges whether the facial size measured by the facial size measuring section 107 is equal to or above the predetermined upper limit value (a step S16). When it is determined that the facial size is equal to or above the predetermined upper limit value based on the judgment (the step S16, YES), the walking state estimating section 108 supplies information indicative of display of information that urges the walker to move back (or stop) (e.g., the red signal) to the output control section 109. In this case, the output control section 109 displays the display information that urges the walker to move back (or stop) (e.g., the red signal) in the display device 103 (a step S17). At this time, the output control section 109 may allow the audio guidance device 102 to generate audio information that urges the walker to move back (or stop).

Furthermore, when it is determined that the facial size is less than the predetermined upper limit value based on the judgment (the step S16, NO), the walking state estimating section 108 judges whether a variation in the facial size measured by the facial size measuring section 107 is equal to or above the predetermined reference value (a step S18). When it is determined that the variation in the facial size is equal to or above the reference value based on this judgment (a step S18, YES), the walking state estimating section 108 supplies information indicative of display of information that urges the walker to reduce a walking speed (e.g., the yellow signal) to the output control section 109. In this case, the output control section 109 displays the display information that urges the walker to reduce a walking speed (e.g., the yellow signal) in the display device 103 (a step S19). At this time, the output control section 109 may allow the audio guidance device 102 to generate audio information that urges the walker to reduce a walking speed.

Moreover, when it is determined that the variation in the facial size is less than the predetermined reference value based on the judgment (the step S18, NO), the walking state estimating section 108 judges whether collection of facial images is completed (a step S20). Completion of collection of facial images may be judged based on whether the number of continuously acquired facial images of the walker has reached a predetermined number, or information indicative of whether facial images required for authentication have been collected from the face authenticating section 106 may be acquired.

When it is determined that collection of facial images is not completed based on the judgment (the step S20, NO), the walking state estimating section 108 supplies information indicating information representing that facial images are being collected (e.g., the blue signal) is displayed to the output control section 109. In this case, the output control section 109 displays the display information indicating that facial images of the walker are being collected (e.g., the blue signal) in the display device 103 (a step S21). At this time, the output control section 109 may allow the audio guidance device 102 to generate audio information indicating that facial images are being collected for the walker.

Additionally, when it is determined that collection of facial images is completed based on the judgment (the step S20, YES), the walking state estimating section 108 supplies the information indicating information representing that collection of facial images is completed is displayed (e.g., a green signal) to the output control section 109. In this case, the output control section 109 displays the display information indicative of completion of collection of facial images for the walker in the display device 103 (a step S22). At this time, the output control section 109 may cause the audio guidance device 102 to generate audio information indicative of completion of collection of facial images for the walker. It is to be noted that the processing at the step S22 may be omitted and a result obtained by the authentication processing at the step S23 may be displayed in the display device 103 in an operating conformation of displaying the authentication result in the display device 103.

Further, upon completion of collection of facial images, the face authenticating section 106 collates characteristic information of a face obtained from the collected facial images (e.g., an input subspace) with characteristic information of a face of a registrant stored in a dictionary database (a dictionary subspace) to judge whether a person of the collected facial images (the walker) is the registrant (a step S23). The face authenticating section 106 supplies an authentication result to the output control section 109.

Consequently, the output control section 109 executes output processing, e.g., displaying the authentication result in the display device 103 in accordance with the authentication result (a step S24). For example, when it is determined that the walker is the registrant, the output control section 109 displays information indicating that the walker is the registrant in the display device 103. Furthermore, when it is determined that the walker is not the registrant, the output control section 109 displays information indicating that the walker does not correspond to the registrant in the display device 103. It is to be noted that, when the face authentication system 1 is applied to a passage control system that controls passage through a gate, the output control section 109 may control opening/closing of the gate based on whether a walker is determined as a registrant.

As explained above, in the first embodiment, a size of a shot face is measured based on a facial region of a walker detected from an image captured by the camera, a current walking state is estimated based on the measured facial size, and a guidance is provided to the walker in accordance with this estimated walking state.

As a result, even if a position of the camera is fixed, a walker as an authentication target person can be urged to take a motion that enables acquirement of an optimum authentication accuracy, thereby providing the face authentication apparatus and the face authentication method that can improve the authentication accuracy.

Moreover, in the first embodiment, positions of the camera and the walker are judged from a facial size, and a guidance is given to achieve an optimum positional relationship between the camera and the walker. As a result, even if a position of the camera is fixed, a face of the walker can be shot in the excellent positional relationship between the camera and the walker, thus improving a facial authentication accuracy.

Additionally, a relative moving speed of a walker with respect to the camera is judged from a variation in a facial size, and a guidance is given to provide an optimum moving speed (walking speed) of the walker with respect to the camera. As a result, even if a position of the camera is fixed, a face of the walker can be shot in the excellent state of the moving speed of the walker with respect to the camera, thereby improving a face authentication accuracy.

A second embodiment will now be explained.

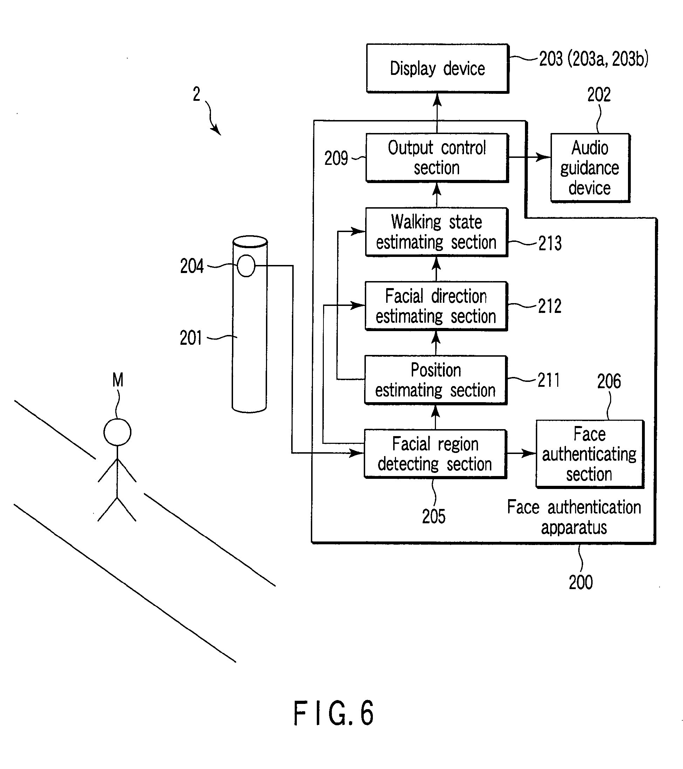

FIG. 6 schematically shows a structural example of a face authentication system 2 according to the second embodiment.

As shown in FIG. 6, the face authentication system 2 is constituted of a face authentication apparatus 200, a support 201, an audio guidance device 202, a display device 203, a camera 204, and others.

The face authentication apparatus 200 is an apparatus that recognizes a person based on his/her facial image. The face authentication apparatus 200 is connected with the audio guidance device 202, the display device 203, and the camera 204. The face authentication apparatus 200 may be installed in the support 201, or may be installed at a position different from the support 201. A structure of the face authentication apparatus 200 will be explained later in detail.

Structures of the support 201, the audio guidance device 202, and the camera 204 are the same as those of the support 101, the audio guidance device 102, and the camera 104 explained in conjunction with the first embodiment. Therefore, a detailed explanation of the support 201, the audio guidance device 202, and the camera 204 will be omitted. It is to be noted that the display device 203 may have the same structure as that of the display device 103. In this second embodiment, a modification of the display device 203 will be also explained later in detail.

The face authentication device 200 is constituted of a facial region detecting section 205, a face authenticating section 206, a position estimating section 211, a facial direction estimating section 212, a walking state estimating section

**EP 1 833 003 A2**

213, an output control section 209, and others. It is to be noted that each processing executed by the facial region detecting section 205, the face authenticating section 206, the position estimating section 211, the facial direction estimating section 212, the walking state estimating section 213, and the output control section 209 is a function realized when a non-illustrated control element, e.g., a CPU executes a control program stored in, e.g., a non-depicted memory. However, each section may be constituted of hardware.

Structures of the facial region detecting section 205 and the face authenticating section 206 are the same as those of the facial region detecting section 105 and the face authenticating section 106. Therefore, a detailed explanation of the facial region detecting section 205 and the face authenticating section 206 will be omitted. However, it is determined that information indicative of a facial region detected by the facial region detecting section 105 is supplied to the position estimating section 211 and the facial direction estimating section 212.

The position estimating section 211 estimates a position of a walker. The position estimating section 211 does not simply measure a relative distance of a face of a walker and the camera 204, but estimates a position or a walking route of the walker in a passage. That is, the position estimating section 211 estimates a position or a walking route of the walker while tracing an image of a facial region (a facial image) detected by the facial region detecting section 205.

For example, the position estimating section 211 saves an image captured in a state without a person (a background image) as an initial image. The position estimating section 211 detects a relative position of a person (i.e., a position of the person in a passage) with respect to the background image based on a difference between a facial image and the initial image. Such a position of the person is detected as, e.g., a coordinate value.

When the above-explained processing is executed with respect to a facial image detected from an image of each frame, the position estimating section 211 can obtain a change in the position of the person (a time-series change in a coordinate). The position estimating section 211 executes the above-explained processing until a facial image is not detected from an image captured by the camera 204. Therefore, the position estimating section 211 traces a position of the walker while the walker exists in a shooting range of the camera 204. The position estimating section 211 supplies an estimation result of a position or a walking route of the person (a walker) to the facial direction estimating section 212 and the walking state estimating section 213.

The facial direction estimating section 212 estimates a direction of a face of a walker. The facial direction estimating section 212 estimates a direction of a face in a facial image detected by the facial region detecting section 205. For example, the facial direction estimating section 212 estimates a direction of a face based on a relative positional relationship of minutiae in a face.

That is, the facial direction estimating section 212 extracts minutiae, e.g., an eye or a nose in a facial image as pre-processing. These minutiae in a facial image are indicated by, e.g., coordinate values. It is to be noted that the processing of extracting minutiae in a facial image may be executed by using information obtained in a process of face collation by the face authenticating section 206.

When coordinate values of minutiae in a facial image are obtained, the facial direction estimating section 212 obtains a correspondence relationship between coordinates of the extracted minutiae and coordinates of minutiae in an average face model. This correspondence relationship is represented in the form of a known rotating matrix R. When the rotating matrix R is obtained, the facial direction estimating section 212 acquire a value $\theta$ indicative of a vertical direction (a pitch) of a face, a value $\psi$ indicative of a lateral direction (a yaw) of the face, and a value $\phi$ indicative of an inclination of the face as internal parameters from the rotating matrix R. For example, it can be considered that a relationship represented by the following Expression 1 is present with respect to each parameter in the rotating matrix R.

$$R(\theta,\ \psi,\ \phi,\ \chi) = R(\theta)R(\psi)R(\phi)\ ... \qquad (Expression\ 1)$$

The facial direction estimating section 212 supplies values such as $\theta$, $\psi$, or $\phi$ as an estimation result of a facial direction to the walking state estimating section 213.

The walking state estimating section 213 estimates a walking state of a walker based on the estimation result obtained by the position estimating section 211 or the facial direction estimating section 212, and determines guidance contents (display contents, or an audio guidance) for the walker in accordance with the walking state. The walking state estimating section 213 supplies information indicative of the determined guidance contents for the walker to the output control section 209.

For example, the walking state estimating section 213 determines guidance contents in accordance with a position (or a walking route) of the walker estimated by the position estimating section 211 as a guidance about the position of the walker. Further, the walking state estimating section 213 determines guidance content as a guidance about a facial direction of the walker in accordance with a facial direction estimated by the facial direction estimating section 212. These guidance contents will be explained later in detail.

The output control section 209 executes display control, audio output control, and others in accordance with

8

the walking state estimated by the walking state estimating section 108. The output control section 209 is constituted of a display control section that controls display contents to be displayed in the display device 203, an audio control section that controls voice generated by the audio guidance device 202, and others. Display contents and others in the display device 203 controlled by the output control section 209 will be explained later in detail.

An example of the display device 203 will now be explained.

As the display device 203, a liquid crystal display device installed in the support 201 or the like explained in conjunction with the first embodiment may be used. In this second embodiment, a conformation using an electric bulletin board 203a or a projector 203b will be explained as an example of the display device 203. It is to be noted that, contrary, an electronic bulletin board or a projector may be used as the display device 203 in place of a liquid crystal display device in the first embodiment.

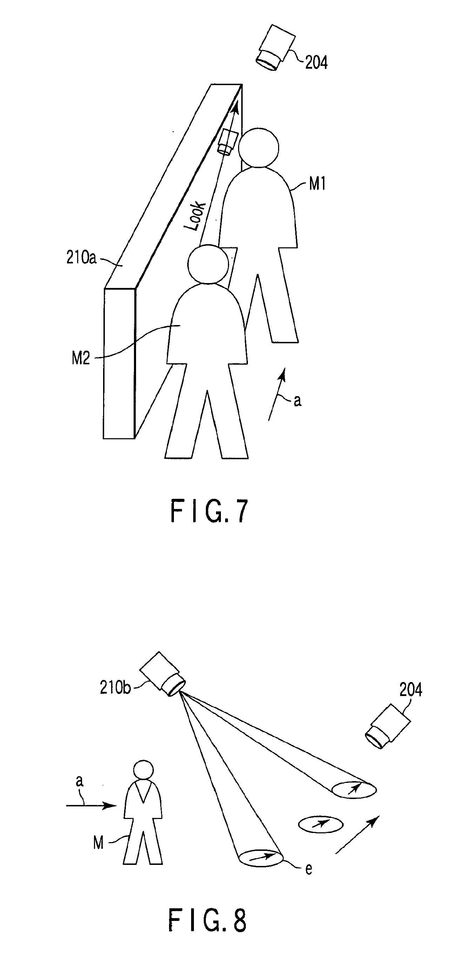

FIG. 7 is a view showing an installation example of an electric bulletin board 203a as the display device 203. Such an electric bulletin board 203a as shown in FIG. 7 displays various kinds of information, e.g., a guidance that allows a walking state of a walker (a walking position, a facial direction, and others) to enter a desired state. In the example depicted in FIG. 7, the electric bulletin board 203a is provided on a side part of a passage that is a shooting range of the camera 204. For example, as shown in FIG. 7, an arrow indicative of a direction of the camera 204, a character that urges to watch the camera 204, or a graphical image that enables a walker to intuitively recognize a position of the camera 204 is displayed in the electric bulletin board 203a.

FIG. 8 is a view showing an installation example of a projector as the display device 203. Such a projector as shown in FIG. 8 displays various kinds of information, e.g., a guidance for a walker on a floor surface or a wall surface in the passage. In the example shown in FIG. 8, a projector 203b is disposed to display information on the floor surface in the passage to show the walker a walking position (a walking route). For example, as depicted in FIG. 8, the projector 203b shows an arrow indicative of a direction along which the walker should walk on the floor surface.

Display control of the display device 203 by the face authenticating device 200 will now be explained.

In the following explanation, display control of the display device 203 in accordance with a facial direction is determined as a first processing example, and display control of the display device 203 in accordance with a position of the walker is determined as a second processing example.

Display control (the first processing example) of the display device 203 in accordance with a facial direction will be first explained.

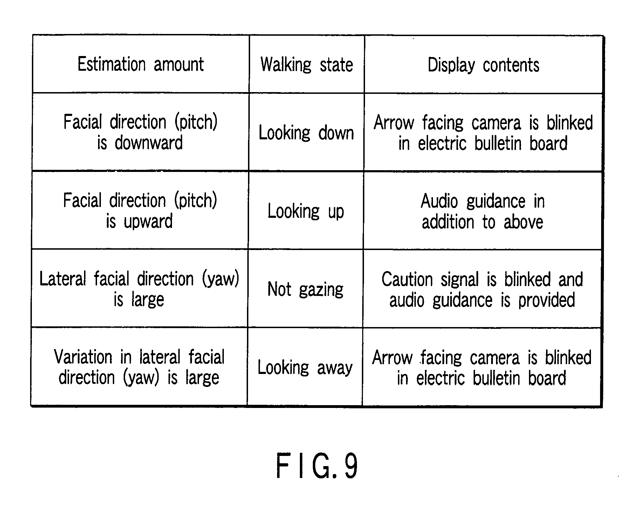

FIG. 9 is a view showing a setting example of display contents in accordance with a facial direction as a walking state. It is assumed that setting information having display contents shown in FIG. 9 is stored in the walking state estimating section 213, for example. It is to be noted that a facial direction of the walker is estimated by the facial direction estimating section 212. It is determined that the walking state estimating section 108 judges display contents according to the facial direction estimated by the facial direction estimating section based on such setting contents as depicted in FIG. 9.

In the setting example depicted in FIG. 9, when a downward inclination amount of a face (a pitch) estimated by the facial direction estimating section 212 is less than a predetermined lower limit value, the walking state estimating section 213 determines that the walker is facing downward, and guides the walker to face upward. In the example depicted in FIG. 9, it is assumed that display contents to be displayed in the electric bulletin board 203a as the display device 203 are set.

In the example depicted in FIG. 9, when a vertical direction of the face (a pitch) estimated by the facial direction estimating section 212 becomes less than the predetermined lower limit (i.e., when it is determined that a downward direction of the face is beyond the lower limit value), the waling state estimating section 213 supplies display information required to display an arrow indicative of an installation position of the camera 204 in the electric bulletin board 203a to the output control section 209 as a guidance that allows the walker to face upward (face the camera). In this case, the walking state estimating section 213 also judges coordinate values and others required to display an arrow in accordance with a position of the walker. A position of the walker may be judged by using an estimation result obtained by the position estimating section 211, or may be judged based on a result of a non-illustrated human detection sensor. As a result, the output control section 209 displays the arrow in the electric bulletin board 203a in accordance with a position of the walker. A direction of the arrow displayed in the electric bulletin board 203a may be direction from the walker toward the camera 204 or may be a direction from the installation position of the camera 204 toward the walker.

Further, the walking state estimating section 213 estimates a direction of the face in accordance with each frame. Therefore, the arrow is updated in accordance with movement of the walker. As a result, the electric bulletin board 203a displays information indicative of the installation position of the camera 204 for the walker. Furthermore, as shown in FIG. 7, the walking state estimating section 213 may supply display information required to display a character string "please look at the camera" or a graphical image representing the camera to the output control section 209 as a guidance displayed in the electric bulletin board 203a.

It is to be noted that, when the projector 203b is used as the display device 203, the walking state estimating section 213 may show an arrow indicative of the installation position of the camera in front of feet of the traced walker as shown in FIG. 8, for example. In this case, the walking state estimating section 213 may likewise supply display information required to display a character string "please look at the camera" and a graphical image indicative of the camera to the output control section 209 as shown in FIG. 8, for example.

In the setting example depicted in FIG. 9, when a vertical direction (the pitch) of the face estimated by the facial direction estimating section 212 becomes equal to or above a predetermined upper limit value (i.e., when the walker faces upward beyond the predetermined upper limit value), the walking state estimating section 213 determines that the walker is facing sideway, and guides the walker to face down (face the camera). The guidance in this case may be the same guidance as that when it is determined that the walker is facing downward. However, when the walker is facing upward, since there is a possibility that the walker does not notice display contents in the electric bulletin board 203a, using both the signal and an audio guidance is preferable.

Furthermore, in the setting example depicted in FIG. 9, when a lateral direction (a yaw) of the face estimated by the facial direction estimating section 212 becomes equal to or above a predetermined upper limit value (i.e., when the walker faces sideway beyond the predetermined upper limit value), the walking state estimating section 213 determines that the walker faces sideway, and guides the walker to face the front side (face the camera). As a guidance that allows the walker to face the front side (face the camera), a blinking caution signal is set to be displayed in the setting example depicted in FIG. 9. Further, since there is a possibility that the walker does not notice display contents in the electric bulletin board 203a, using both the signal and an audio guidance is preferable.

Moreover, in the setting example depicted in FIG. 9, when a variation in a lateral direction (the yaw) of the face estimated by the facial direction estimating section 212 becomes equal to or above the predetermined upper limit value (i.e., when the walker steeply turns away), the walking state estimating section 213 determines that the walker steeply turns away, e.g., glances around unnecessarily, and guides the walker to face the front side (face the camera). As a guidance that allows the walker to face the front side (face the camera), an arrow directed toward the walker from the installation position of the camera 204 is set to be displayed in the setting example depicted in FIG. 9.

It is to be noted that the setting of display contents based on each facial direction shown in FIG. 9 can be appropriately set in accordance with, e.g., an operating conformation.

A flow of the second processing in the face authentication system 2 will now be explained.

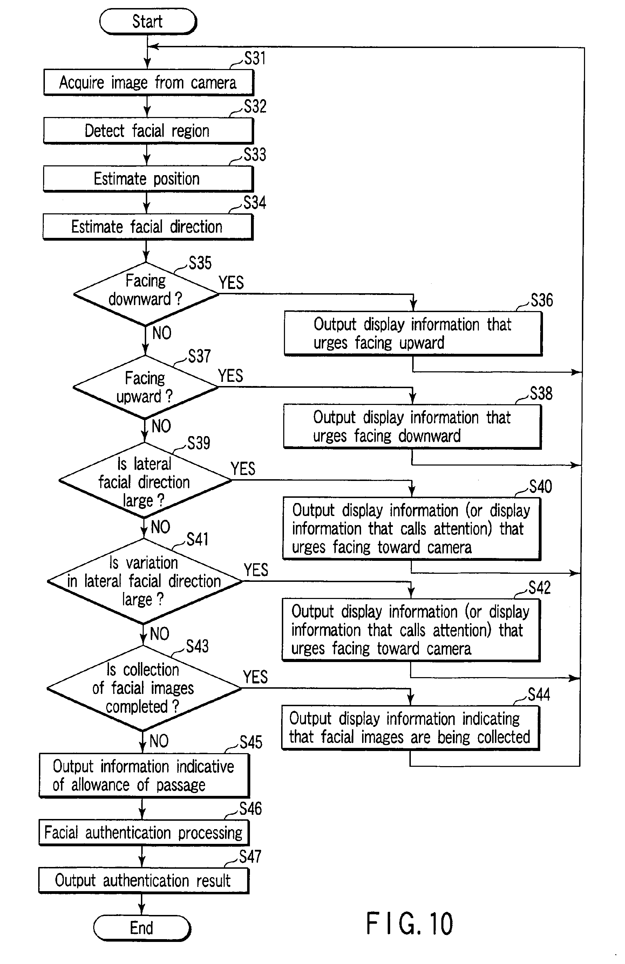

FIG. 10 is a flowchart for explaining a flow of the second processing in the face authentication system 2.

An image of each frame captured by the camera 204 is sequentially supplied to the facial region detecting section 205. When an image is supplied from the camera 204 (a step S31), the facial region detecting section 205 detects an image of a facial region of a walker from this picture (a step S32). The image of the facial region of the walker detected by the facial region detecting section 205 is supplied to the face authenticating section 206 and the position estimating section 211. Here, the face authenticating section 206 stores facial images detected from respective frames until the number of facial images required as input facial images (until collection of facial images is completed) are obtained.

The position estimating section 211 estimates a position of the walker from the image of the facial region detected by the facial region detecting section 205 (a step S33). That is, the position estimating section 211 estimates a position of the walker from the image of the facial region by the above-explained technique. Further, the facial direction estimating section 212 estimates a facial direction of the walker from the image of the facial region detected by the facial region detecting section 205 (a step S34). As explained above, this facial direction is judged based on a relative positional relationship of minutiae of a face (an eye or a nose) in this facial image.

When the facial direction is determined by the facial direction estimating section 212, the walking state estimating section 213 judges display information in accordance with a walking state based on the facial direction estimated by the facial direction estimating section 212. That is, the walking state estimating section 213 judges whether a vertical direction of the face estimated by the facial direction estimating section 212 is less than a predetermined lower limit value (a step S35). When it is determined that the vertical direction of the face is less than the predetermined lower limit value by this judgment (the step S35, YES), the walking state estimating section 213 supplies to the output control section 209 information indicative of display of a guidance (e.g., an arrow, a character string, or a graphical image) that urges the walker to face up toward the camera. In this example, the output control section 209 displays the display information that urges the walker to face up toward the camera in the electric bulletin board 203a or the projector 203b (a step S36). At this time, the output control section 209 may allow the audio guidance device 202 to generate audio information that urges the walker to move forward.

Moreover, when it is determined that the vertical direction of the face is equal to or above the predetermined lower limit value (the step S35, NO), the walking state estimating section 213 judges whether the vertical direction of the face estimated by the facial direction estimating section 212 is equal to or above a predetermined upper limit value (a step S37). When it is determined that the vertical direction of the face is equal to or above the predetermined upper limit value by this judgment (the step S37, YES), the walking state estimating section 213 supplies to the output control section 209 information indicative of display of a guidance (e.g., an arrow, a character string, or a graphical image) that urges the walker to face down toward the camera. In this case, the output control section 209 displays display information (e.g., a red signal) that urges the walker to face down toward the camera in the electric bulletin board 203a or the projector 203b (a step S38). At this time, the output control section 209 may allow the audio guidance device 202 to generate an audio guidance that urges the walker to face down toward the camera.

Additionally, when it is determined that the vertical direction of the face is less than the predetermined upper limit value by the judgment (the step S37, NO), the walking state estimating section 213 judges whether a lateral direction (a yaw) of the face estimated by the facial direction estimating section 212 is equal to or above a predetermined reference value (a step S39). When it is determined that the lateral direction of the face is equal to or above the predetermined reference value by this judgment (the step S39, YES), the walking state estimating section 213 supplies to the output control section 209 information required to display a guidance that urges the walker to face toward the camera in the electric bulletin board 203a or the projector 203b. In this case, the output control section 209 displays display information that urges the walker to face toward the camera in the electric bulletin board 203a or the projector 203b (a step S40). At this time, the output control section 209 may allow the audio guidance device 202 to generate audio information that urges the walker to reduce a walking speed.

Further, when it is determined that the lateral direction of the face is less than the predetermined reference value by the judgment (the step S39, NO), the walking state estimating section 213 judges whether a variation in the lateral direction (the yaw) of the face estimated by the facial direction estimating section 212 is equal to or above the predetermined reference value (a step S41). When it is determined that the variation in the lateral direction of the face is equal to or above the predetermined reference value by this judgment (the step S41, YES), the walking state estimating section 213 supplies to the output control section 209 information required to display a guidance that urges the walker to pay attention to the camera in the display device 203. In this case, the output control section 209 displays display information that urges the walker to face the camera in the electric bulletin board 203a or the projector 203b (a step S42). At this time, the output control section 209 may allow the audio guidance device 202 to generate audio information that urges the walker to reduce a walking speed.

Furthermore, when it is determined that the variation in the lateral direction of the face is less than the predetermined reference value by the judgment (the step S41, NO), the walking state estimating section 213 judges whether collection of facial images is completed (a step S43). Completion of collection of facial images may be judged based on whether the number of continuously acquired facial image of the walker has reached a predetermined number, or information indicative of whether facial images required for authentication have been collected may be acquired from the face authenticating section 206.

When it is determined that collection of facial images is not completed by the judgment (the step S43, NO), the walking state estimating section 213 supplies to the output control section 209 information representing that information indicating that facial images are being collected (e.g., a blue signal) is to be displayed. In this case, the output control section 209 displays display information indicating that facial images are being collected for the walker in the display device 203 (a step S44). At this time, the output control section 209 may allow the audio guidance device 202 to generate audio information indicating that facial images are being collected for the walker.

Moreover, when it is determined that collection of facial images is completed by the judgment (the step S43, YES), the walking state estimating section 213 supplies to the output control section 209 information representing that information indicative of completion of collection of facial images (e.g., a green signal) is to be displayed. In this case, the output control section 209 displays display information indicative of completion of collection of facial images for the walker in the display device 203 (a step S45). At this time, the output control section 209 may allow the audio guidance device 202 to generate audio information indicative of completion of collection of facial images for the walker. It is to be noted that the processing at the step S45 may be omitted and a result obtained from the authentication processing at the step S46 may be displayed in the display device 203 in an operating conformation of displaying the authentication result in the display device 203.

Additionally, upon completion of collection of facial images, the face authenticating section 206 collates characteristic information of the face obtained from the collected facial images (e.g., an input subspace) with characteristic information of a face of a registrant stored in the dictionary database (a dictionary subspace), thereby judging whether the person corresponding to the collected facial images (the walker) is the registrant (a step S46). The face authenticating section 206 supplies an authentication result to the output control section 209.

As a result, the output control section 209 executes output processing in accordance with the authentication result, e.g., displaying the authentication result in the display device 203 (a step S47). For example, when it is determined that the walker is the registrant, the output control section 209 displays information indicating that the walker has been confirmed as the registrant in the display device 203. Further, when it is determined that the walker is not the registrant, the output control section 209 displays information indicating that the walker does not match with the registrant in the display device 203. It is to be noted that, when the face authentication system 2 is applied to a passage control system that controls passage through a gate, it is good enough for the output control section 209 to control opening/closing of the gate based on whether the walker is determined as the registrant.

As explained above, according to the first processing example of the second embodiment, a facial direction of the walker is estimated, a walking state of the walker is estimated based on this estimated facial direction, and a guidance is provided based on this estimated walking state so that the facial direction of the walker becomes excellent.

As a result, even if a position of the camera is fixed, a facial image of the walker can be captured at an excellent angle, thereby improving an authentication accuracy. Furthermore, since a position of the walker is traced, a guidance for the walker can be provided in accordance with the position of the walker.

Display control (a second processing example) of the display device 203 effected in accordance with a position of a walker (a walking route) will now be explained.

Incidentally, in regard to a walking position of a walker, it is assumed that the position estimating section 211 traces a time-series transition of a coordinate in a facial region detected by the facial region detecting section 205.

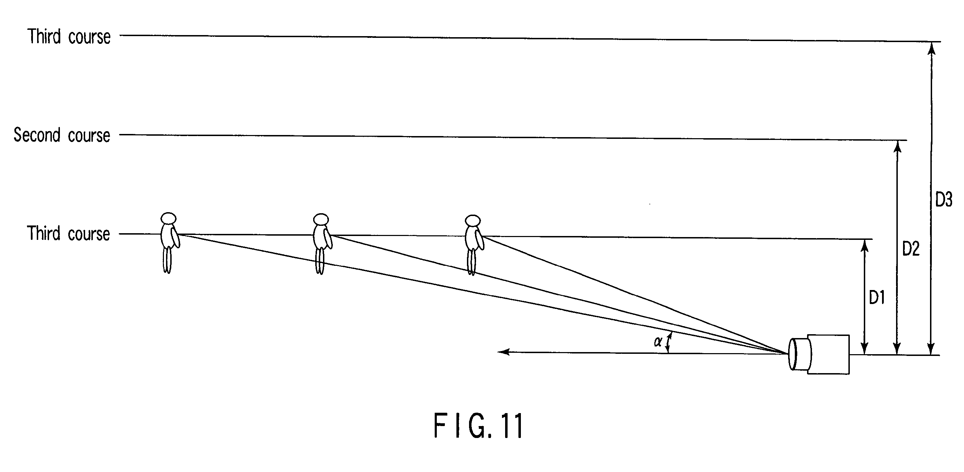

FIG. 11 is a view showing a relationship between a walking route of a walker and an installation position of the camera. In an example depicted in FIG. 11, a relationship between three walking routes (a first course, a second course, and a third course) and an installation angle of the camera is shown.

As depicted in FIG. 11, an angle $\alpha$ formed between a movement direction of a walker and a straight line connecting the walker with the camera 204 in each course constantly varies with movement of the walker. Further, assuming that the walker walks facing the movement direction, the angle $\alpha$ indicates a lateral direction (a yaw) of a face of the walker in an image captured by the camera 204. That is, it is predicted that the angle $\alpha$ increases when a distance D between each course and the installation position of the camera 204 becomes larger. In other words, when shooting the face of the walker facing toward a front side is wanted, the smaller distance D between the camera and the walking course is desirable. For example, in FIG. 11, the face of the walker who is walking along the first course is prone to be shot at an angle closest to the front side.

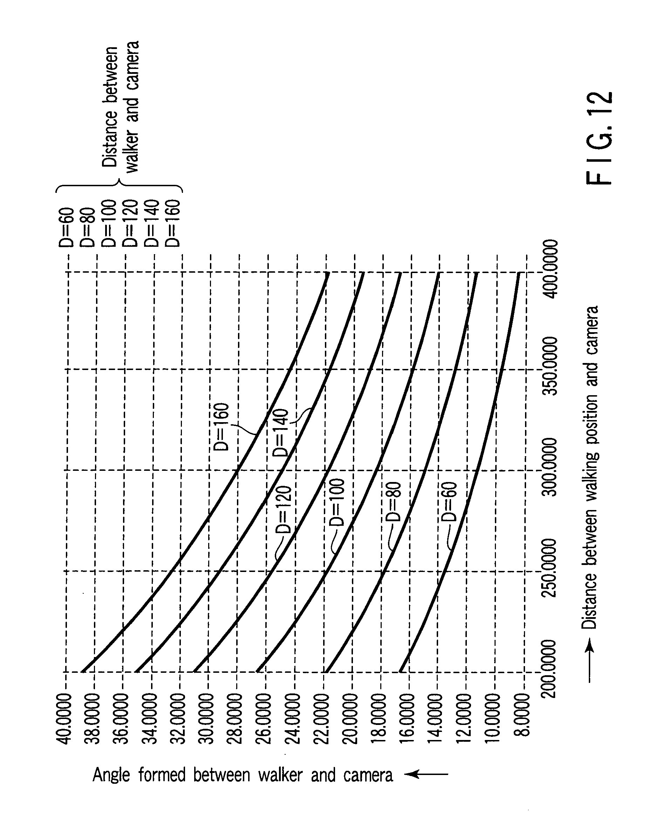

FIG. 12 is a view showing an angle formed between the walker and the camera with respect to a distance between each of the plurality of above-explained courses (the walking routes) and the camera. As shown in FIG. 12, the angle between the walker and the camera tends to be reduced as the distance from the camera is shorter in each course. Therefore, when a face of the walker should be shot from the front side if at all possible like the face authentication processing, it can be considered that walking along the course where the distance from the camera is as small as possible is preferable.

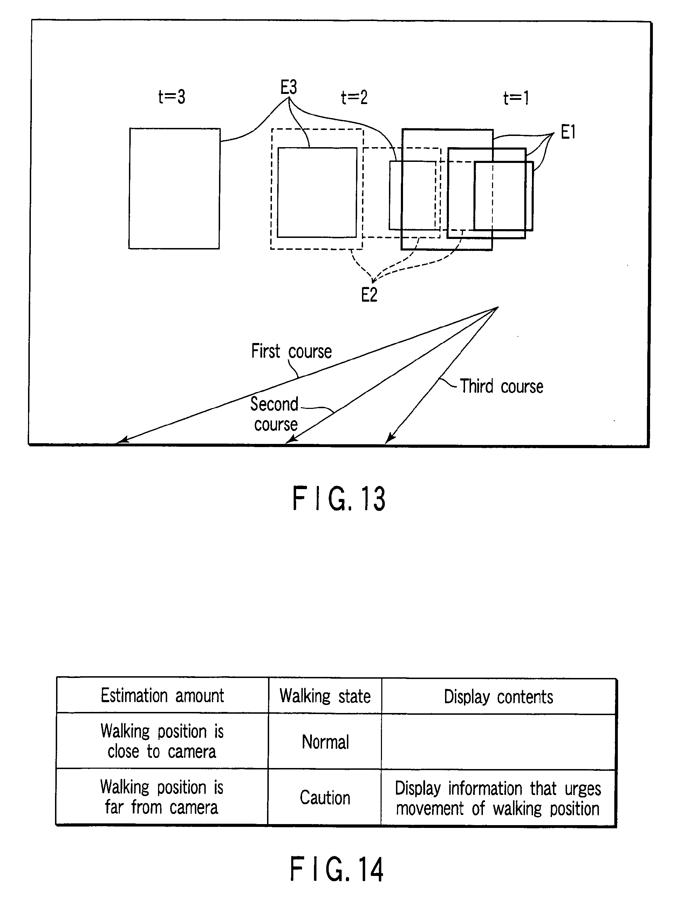

FIG. 13 is a view schematically showing an example of a coordinate position where a facial region of a walker who walks along three routes appears in images continuously captured by the camera. Furthermore, in the example shown in FIG. 13, the courses are determined as a first course, a second course, and a third course from the side close to the camera 204. Moreover, it is assumed that the camera 204 approaches the walker who walks along each course in the time order (t=1, t=2, and t=3). It is to be noted that, in the example depicted in FIG. 13, E3 represents a change in the coordinate position indicative of the facial region of the walker who walks along the third course; E2, a change in the coordinate position indicative of the facial region of the walker who walks along the second course; and E1, a change in the coordinate position indicative of the facial region of the walker who walks along the first course.

As shown in FIG. 13, a change in the coordinate position indicative of the face region of the walker who walks along the third course is more prominent than that of the walker who walks along the first course. This means that a change in a facial direction in an image obtained by shooting the walker walking along the third course is larger than that in an image obtained by shooting the walker walking along the first course. In other words, when it is predicted that the walker walks along a course far from the camera, enabling shooting the face of the walker in an excellent state (an angle close to the front side) can be expected by urging the walker to change a movement direction (a walking route). Moreover, as a guidance for such a walker, an arrow or an animation that urges the walker to change a walking course in the electric bulletin board 203a or the projector 203b can be considered.

An example of setting display contents in accordance with a walking position will now be explained.

FIG. 14 is a view showing an example of setting display contents in accordance with a walking position.

In the example depicted in FIG. 14, when it is presumed that a walking position is far from the camera 204, it is determined that attention must be paid to a walking state of a walker, and a guidance that urges the walker to move the walking position is set to be displayed. As explained above, the position estimating section 211 traces a walking position (a walking course) in accordance with each walker based on, e.g., a coordinate of a facial region detected from an image captured by the camera 204. Therefore, when a distance between the traced waling position and the camera 204 is equal to or above a predetermined reference value, the walking state estimating section 213 determines that attention must be paid to the walking state, and supplies to the output control section 209 information indicating that a guidance for moving the walking position is displayed. As a result, the output control section 209 displays the guidance for moving the walking position in the electric bulletin board 203a or the projector 203b. In the above-explained setting, for example, when the camera is provided at the center of a passage, walker who is going to walk along a side of the passage can be urged to walk at the center of the passage.

A flow of the second processing in the face authentication system 2 will now be explained.

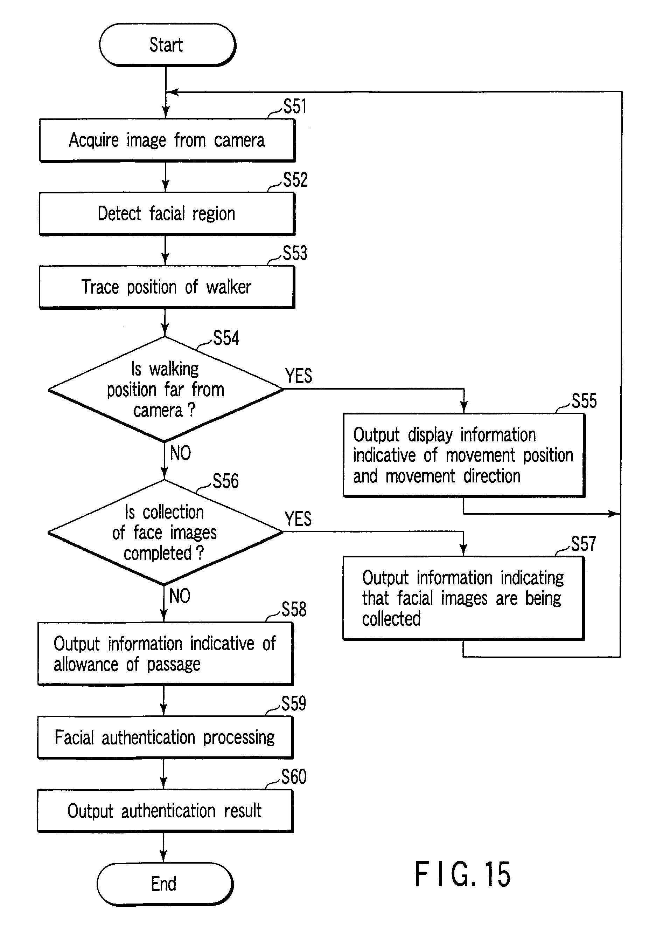

FIG. 15 is a flowchart for explaining a flow of the second processing in the face authentication system 2.

An image of each frame captured by the camera 204 is sequentially supplied to the facial region detecting section 205. When the image is supplied from the camera 204 (a step S51), the facial region detecting section 205 detects an image of a facial region of a walker from this image (a step S52). The image of the facial region of the walker detected by the facial region detecting section 205 is supplied to the face authenticating section 206 and the position estimating section 211. Here, it is assumed that the face authenticating section 206 stores facial images detected from respective frames until the number of facial images required as input facial images can be obtained (until collection of facial images is completed).

The position estimating section 211 estimates a position of the walker from the image of the facial region detected by the facial region detecting section 205 (a step S53). The position estimating section 211 estimates the position of the walker from the image of the facial region by the above-explained technique. In particular, it is assumed that the position estimating section 211 estimates a walking course of the walker by tracing the position of the walker. Information indicative of the walking course estimated by the position estimating section 211 is supplied to the walking position estimating section 213.

The walking position estimating section 213 judges whether a distance between the walking position (the walking course) estimated by the position estimating section 211 and the camera is equal to or above a predetermined reference value (a step S54). When it is determined that the distance between the walking position and the camera is equal to or above the predetermined reference value, i.e., when it is determined that the walking position is far from the camera (the step S54, YES), the walking state estimating section 213 supplies to the output control section 209 information indicating that a guidance showing the waking position and a walking direction (e.g., an arrow, a character string, or a graphical image) is displayed for the walker. In this case, the output control section 209 displays display information showing the walking position and the walking direction in the electric bulletin board 203a or the projector 203b (a step S55). At this time, the output control section 209 may allow the audio guidance device 202 to generate audio information that urges the walker to change the walking position and the walking direction.

Additionally, when it is determined that the distance between the walking position and the camera is less than the predetermined reference value (the step S54, NO), the walking state estimating section 213 judges whether collection of facial images is completed (a step S56). Completion of collection of facial images may be judged based on whether the number of continuously acquired facial images of the walker has reached a predetermined number, or information indicating whether facial images required for authentication have been collected may be acquired from the face authenticating section 106.

When it is determined that collection of facial images is not completed by the judgment (the step S56, NO), the walking state estimating section 213 supplies to the output control section 209 information representing display of information indicating that facial images are being collected. In this case, the output control section 209 displays display information indicating that facial images are being collected in the display device 203 for the walker (a step S57). At this time, the output control section 209 may allow the audio guidance device 202 to generate audio information indicating that facial images are being collected for the walker.

Further, when it is determined that collection of facial images is completed by the judgment (the step S56, YES), the walking state estimating section 213 supplies to the output control section 209 information representing information indicative of completion of collection of facial images is displayed. In this case, the output control section 209 displays display information indicative of completion of collection of facial images in the electric bulletin board 203a or the projector 203b for the walker (a step S58). At this time, the output control section 209 may allow the audio guidance device 202 to generate audio information indicative of completion of collection of facial images for the walker. It is to be noted that the processing at the step S58 may be omitted and a result obtained by the authentication processing at the step S59 may be displayed in the electric bulletin board 203a or the projector 203b in an operating conformation of displaying the authentication result in the display device 203.

Furthermore, upon completion of collection of facial images, the face authenticating section 206 collates characteristic information of a face obtained from the collected facial images (e.g., an input subspace) with characteristic information of a face of a registrant stored in the dictionary database (a dictionary subspace), thereby judging whether the person corresponding to the collected facial images (the walker) is the registrant (a step S59). The face authenticating section 206 supplies an authentication result to the output control section 209.

As a result, the output control section 209 executes output processing, e.g., displaying the authentication result in the display device 203 in accordance with the authentication result (a step S60). For example, when it is determined that the walker is the registrant, the output control section 209 displays the fact that the walker is confirmed as the registrant in the display device 203. Moreover, when it is determined that the walker is not the registrant, the output control section 209 displays the fact that the walker does not match with the registrant in the display device 203. It is to be noted that, when the face authentication system 2 is applied to a passage control system that controls passage through a gate, it is good enough for the output control section 209 to control opening/closing the gate based on whether the walker is determined as the registrant.

In the second processing example according to the second embodiment, a walking position of a walker is traced, and whether a distance between a walking course of the walker and the camera is equal to or above a predetermined reference value is judged. When it is determined that the distance between the walking course and the camera is equal to or above the predetermined reference value by the judgment, the walker is urged to walk along a walking course close to the camera.

As a result, even if a position of the camera is fixed, an image of a face of the walker can be captured at an excellent angle, thereby improving an authentication accuracy. Moreover, since a position of the walker is traced, a guidance can be provided in accordance with the position of the walker.

Additionally, in the second embodiment, a walking position is changed by utilizing the display device, e.g., the electric bulletin board or the projector, or the audio guidance device. As a result, the walker can be urged to change a walking position in a natural state, and hence no great burden is imposed on a user.

**Claims**

1. A face authentication apparatus (100, 200) **characterized by** comprising:

   a face detecting section (105, 205) that detects a facial image of an authentication target person from each of a plurality of images supplied from a shooting device (104, 204) that continuously shoots a predetermined shooting range;
   a state estimating section (108, 213) that estimates a state of the authentication target person based on the facial image detected from each image by the face detecting section (105, 205);
   an output section (109, 209) that outputs a guidance in accordance with the state of the authentication target person estimated by the state estimating section (108, 213); and
   an authenticating section (106, 206) that authenticates the authentication target person based on the facial image detected from each image by the face detecting section (105, 205).

2. The face authentication apparatus (100) according to claim 1, **characterized by** further comprising a measuring section (107) that measures a facial size based on the facial image detected from each image by the face detecting section (105),
   wherein the state estimating section (108) estimates a state of the authentication target person based on the facial size measured by the measuring section (107).

3. The face authentication apparatus (100, 200) according to claim 1,
   **characterized in that** the output section (109, 209) outputs a guidance that urges the authentication target person to perform an operation in accordance with the state of the authentication target person estimated by the state estimating section (108, 213).

4. The face authentication apparatus (100, 200) according to claim 1,
   **characterized in that** the output section (109, 209) outputs display information required to display information that urges the authentication target person to perform a desired operation in an electric bulletin board (203a) installed in a passage along which the authentication target person should walk in accordance with the state of the authentication target person estimated by the state estimating section (108, 213).

5. The face authentication apparatus (100, 200) according to claim 1,
   **characterized in that** the output section (109, 209) outputs display information required to display information that urges the authentication target person to perform a desired operation on a floor where the authentication target person should pass by using a projector (203b) in accordance with the state of the authentication target person estimated by the state estimating section (108, 213).

6. The face authentication apparatus (200) according to claim 1,
   **characterized by** further comprising a direction estimating section (212) that estimates a facial direction based on a facial image detected from each image by the face detecting section (205),
   wherein the state estimating section (213) estimates a state of the authentication target person based on the facial direction estimated by the direction estimating section (212).

7. The face authentication apparatus (200) according to claim 6,
   **characterized in that** the output section (209) outputs a guidance that urges the authentication target person to perform an operation in accordance with the state of the authentication target person estimated based on the facial direction by the state estimating section (213).

**8.** The face authentication apparatus (200) according to claim 6,
**characterized in that** the output section (209) outputs display information required to display information that urges the authentication target person to perform a desired operation in an electric bulletin board (203a) installed along a passage where the authentication target person should pass in accordance with the state of the authentication target person estimated by the state estimating section (213) based on the facial direction in the direction estimating section (212).

**9.** The face authentication apparatus (200) according to claim 6,
**characterized in that** the output section (209) outputs information required to display information that urges the authentication target person to perform a desired operation on a floor where the authentication target person should pass by using a projector (203b) based on the facial direction estimated by the direction estimating section (212) in accordance with the state of the authentication target person estimated by the state estimating section (213).

**10.** The face authentication apparatus (200) according to claim 1, **characterized by** further comprising a position estimating section (211) that estimates a movement course of the authentication target person based on the facial image detected from each image by the face detecting section (205),
wherein the state estimating section (213) estimates a state of the authentication target person based on the movement course estimated by the position estimating section (211).

**11.** The face authentication apparatus (200) according to claim 10,
**characterized in that** the output section (209) outputs a guidance that urges the authentication target person to perform an operation in accordance with the state of the authentication target person estimated by the state estimating section (213) based on the movement course estimated by the position estimating section (211).

**12.** The face authentication apparatus (200) according to claim 10,
**characterized in that** the output section (209) outputs display information required to display information that urges the authentication target person to perform a desired operation in an electric bulletin board (203a) installed along a passage where the authentication target person should pass based on the movement course estimated by the position estimating section (211) in accordance with the state of the authentication target person estimated by the state estimating section (213).

**13.** The face authentication apparatus (200) according to claim 10,
**characterized in that** the output section (209) outputs display information required to display information that urges the authentication target person to perform a desired operation on a floor where the authentication target person should pass by using a projector (203b) based on the movement course estimated by the position estimating section (211) in accordance with the state of the authentication target person estimated by the state estimating section (213).

**14.** A face authentication method used in a face authentication apparatus, the method **characterized by** comprising:

detecting (S12, S32, S52) a facial image of an authentication target person from each of a plurality of images supplied from a shooting device that continuously shoots a predetermined shooting range;
estimating (S14, S16, S18, S35, S37, S39, S41, S54) a state of the authentication target person based on the facial image detected from each image taken by the shooting device;
outputting (S15, S17, S19, S36, S38, S40, S42, S55) a guidance in accordance with the estimated state of the authentication target person; and
authenticating (S23, S46, S59) the authentication target person based on the facial image detected from each image taken by the shooting device.

**15.** The face authentication method according to claim 14, **characterized by** further comprising measuring (S13) a facial size based on the facial image detected from each image taken by the shooting device,
wherein estimating (S14, S16, S18) the state estimates a state of the authentication target person based on the measured facial size.

**16.** The face authentication method according to claim 14, **characterized by** further comprising estimating (S34) a facial direction based on the facial image detected from each image taken by the shooting device,
wherein estimating (S35, S37, S39, S41) the state estimates a state of the authentication target method based on the estimated facial direction.

**17.** The face authentication method according to claim 14, **characterized by** further comprising estimating (S53) a movement course of the authentication target person based on the facial image detected from each image taken by the shooting device,

wherein estimating (S54) the state estimates a state of the authentication target person based on the estimated movement course.

FIG.1

| Measurement amount | Walking state | Information displayed for walker |
|---|---|---|
| When facial size is small | Too far | Information that urges forward movement (blue signal) |
| When variation in facial size is large | Walking speed is too high | Information that urges reduction in walking speed (yellow signal) |
| When facial size exceeds fixed amount | Too close | Information that urges stop (or backward movement) (red signal) |
| Number of collected frames exceeds necessary number | | Information indicative of allowance of passage (green signal) |

FIG. 2

| In case of regular walking | | | | | | |
|---|---|---|---|---|---|---|
| | ☺ | ☺ | ☺ | ☺ | ☺ | ☺ |
| Facial size | 10 | 20 | 30 | 40 | 50 | 60 |
| Variation in facial size | ··· | 10 | 10 | 10 | 10 | 10 |
| Display information | Blue | Blue | Blue | Blue | Blue | Blue |

FIG. 3

| When walking speed is high | | | | | | |
|---|---|---|---|---|---|---|
| | ☺ | ☺ | ☺ | ☺ | ☺ | ☺ |
| Facial size | 10 | 40 | 60 | 70 | 80 | 70 |
| Variation in facial size | ··· | 30 | 20 | 10 | 10 | -10 |
| Display information | Blue | Yellow | Yellow | Blue | Red | Blue |

FIG. 4

FIG.5

Display device —203 (203a, 203b)

202

2

209 — Output control section

Audio guidance device

Walking state estimating section —213

204

Facial direction estimating section —212

201

Position estimating section —211

206

M

Facial region detecting section

Face authenticating section

205

Face authentication apparatus

200

FIG. 6

FIG. 7

FIG. 8

| Estimation amount | Walking state | Display contents |
|---|---|---|
| Facial direction (pitch) is downward | Looking down | Arrow facing camera is blinked in electric bulletin board |
| Facial direction (pitch) is upward | Looking up | Audio guidance in addition to above |
| Lateral facial direction (yaw) is large | Not gazing | Caution signal is blinked and audio guidance is provided |
| Variation in lateral facial direction (yaw) is large | Looking away | Arrow facing camera is blinked in electric bulletin board |

# FIG. 9

Start

Acquire image from camera — S31

Detect facial region — S32

Estimate position — S33

Estimate facial direction — S34

Facing downward ? — S35
YES → Output display information that urges facing upward — S36
NO

Facing upward ? — S37
YES → Output display information that urges facing downward — S38
NO

Is lateral facial direction large ? — S39
YES → Output display information (or display information that calls attention) that urges facing toward camera — S40
NO

Is variation in lateral facial direction large ? — S41
YES → Output display information (or display information that calls attention) that urges facing toward camera — S42
NO

Is collection of facial images completed ? — S43
YES → Output display information indicating that facial images are being collected — S44
NO

Output information indicative of allowance of passage — S45

Facial authentication processing — S46

Output authentication result — S47

End

F I G. 10

F I G. 11

Third course

Second course

Third course

D3

D2

D1

α

EP 1 833 003 A2

F I G. 12

F I G. 13

| Estimation amount | Walking state | Display contents |
|---|---|---|
| Walking position is close to camera | Normal | |
| Walking position is far from camera | Caution | Display information that urges movement of walking position |

F I G. 14

Start

Acquire image from camera  /S51

Detect facial region  /S52

Trace position of walker  /S53

S54
Is walking position far from camera ?
YES → Output display information indicative of movement position and movement direction  /S55

NO

S56
Is collection of face images completed ?
YES → Output information indicating that facial images are being collected  /S57

NO

Output information indicative of allowance of passage  /S58

Facial authentication processing  /S59

Output authentication result  /S60

End

FIG. 15

**EP 1 833 003 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001266152 A
- JP 2003141541 A
- JP 2004356730 A

**Non-patent literature cited in the description**

- **FUKUI ; YAMAGUCHI.** Facial minutia extraction based on a combination of shape extraction and pattern matching. *IECE Japan, (D,* 1997, vol. J80-D-H (8), 2170-2177